# EUROPEAN PATENT SPECIFICATION

(11) **EP 3 404 928 B1**
(45) Date of publication and mention of the grant of the patent: **25.11.2020**
(21) Application number: 17425049.8
(22) Date of filing: 19.05.2017
(51) Int. Cl.: H04Q 9/00, G08B 29/14

(54) **IMPROVED ELECTRONIC UNIT FOR CONTROLLING FIRE SENSORS**
VERBESSERTE ELEKTRONISCHE VORRICHTUNG FÜR DIE STEUERUNG VON FEUER SENSOREN.
DISPOSITIF ÉLECTRONIQUE AMÉLIORÉ POUR CONTRÔLER DES CAPTEURS D'INCENDIE.

(43) Date of publication of application: 21.11.2018
(73) Proprietor: Safco Engineering S.p.A., 20096 Pioltello, Milano (IT)
(72) Inventor: CAU, Sergio, 20096 Pioltello, Milano (IT); Zago, Gianbattista, 20096 Pioltello, Milano (IT)
(74) Representative: Mozzi, Matteo

(56) References cited:
- EP-A2- 1 583 055
- WO-A1-2010/096932
- DE-C1- 19 960 422
- JP-B2- 2 994 105
- KR-A- 20070 015 468

## Description

### TECHNOLOGICAL BACKGROUND OF THE INVENTION

### Field of application

The present invention generally relates to electronic systems for detecting fires, including a plurality of sensors. In particular, the invention relates to an electronic unit for controlling fire sensors which includes means for checking the correct operation of the circuits in charge of receiving signals from such sensors.

### Description of the prior art

In fire detection systems of known type, a plurality of fire sensors are connected to one another through a communication network and are monitored by a central control unit. In particular, monitoring such sensors includes transmitting periodical signals for querying each sensor on the network and receiving corresponding reply signals indicative of the operating status of the queried sensors.

Such control units are generally equipped with electronic circuits configured to receive and interpret the reply signals sent by the queried sensors of the network.

Such a step of receiving and interpreting the reply signals generated by the sensors is a critical operating aspect of a fire detection system.

Indeed, an incorrect reception and interpretation of such reply signals may determine the generation of repeated false alarms in the fire detection system and in the most severe cases the failed detection of the occurrence of a real alarm condition. This reduces the reliability of the fire detection system.

In fire detection systems of known type, the incorrect reception of the aforesaid reply signals is, for example, caused by faults or malfunctions which occur in the reception electronic circuits of the signals present in the control unit.

In such known detection systems, other types of malfunctions which may impede the correct reception of the reply signals of the sensors comprise overcurrents or short-circuits which occur in the communication network. Such short-circuits or overcurrents may be detected by means of the respective circuits provided in the control unit. However, the circuits for detecting short-circuits or overcurrents are also not free from malfunctions.

Document WO 2010/096932 A1 discloses a system and method for recording and evaluating faults in event transmissions between security system components.

### SUMMARY OF THE INVENTION

The invention is defined by the appended claims. It is the object of the present invention to provide and make available an electronic control unit for controlling one or more fire sensors in a fire detection system which allows to overcome, at least partially, the drawbacks and the limits mentioned above, related to the known fire detection systems.

In particular, it is the object of the invention to provide an electronic control unit of one or more fire sensors which allows to periodically test the correct operation of the electronic circuits in charge of receiving and interpreting the signals sent by the sensors and of those configured to detect malfunctions which occur in the communication network.

Such an object is achieved by an electronic control unit of one or more fire sensors, according to claim 1.

Preferred embodiments of such an electronic control unit are described in the dependent claims.

### BRIEF DESCRIPTION OF THE DRAWINGS

Further features and advantages of the electronic control unit according to the invention will become apparent from the following description which discloses preferred embodiments, given by way of indicative, non-limiting examples, with reference to the accompanying drawings, in which:
- **figure 1** shows an electronic unit for controlling fire sensors in a fire detection system by means of a block chart;
- **figure 2** diagrammatically shows an example of a managing stage of the fire sensors of the present invention included in the controlling electronic unit in figure 1;
- **figure 3** diagrammatically shows a circuitry diagram of a first checking block included in the managing stage of the fire sensors in figure 2;
- **figure 4** diagrammatically shows a circuitry diagram of a second checking block included in the managing stage of the fire sensors in figure 2.

Similar or equivalent elements in the aforesaid figures are indicated by the same reference numerals.

### DETAILED DESCRIPTION

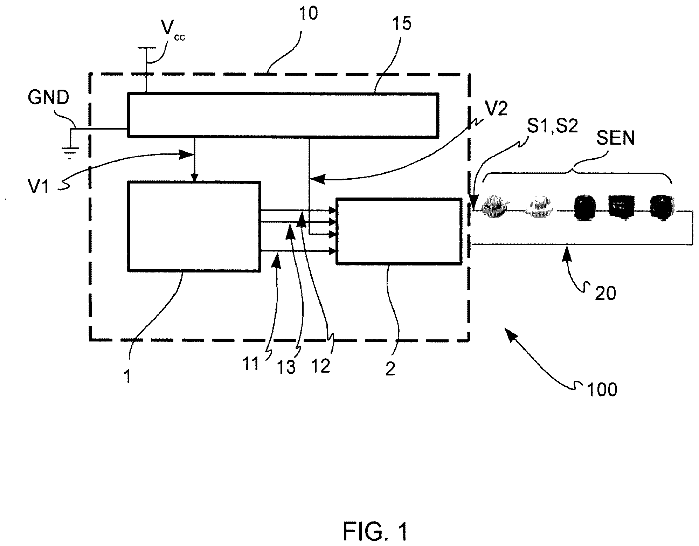

With reference to figures 1-2, an electronic system for detecting fires in an environment is indicated as a whole by reference numeral 100. Such an electronic system 100 comprises one or more fire sensors SEN distributed in this environment and an electronic control unit 10 electrically connected to such one or more sensors SEN.

Again which reference to figure 1, such an electronic unit 10 comprises a processing stage 1, e.g. consisting of a microprocessor or microcontroller (Central Processing Unit or CPU).

Furthermore, the electronic unit 10 comprises a managing stage 2 of the aforesaid one or more sensors SEN. In particular, such a managing stage 2 can be connected, during a first interval of time t1, i.e. an interval of time for querying the sensors SEN, to a data communication line 20 of the system 100 configured to connect one or more sensors SEN to one another.

Such a managing stage 2 is activated by the processing stage 1 of the electronic unit 10 to generate, during the aforesaid first interval of time t1, first digital querying signals S1 to be sent to the one or more sensors SEN through the data communication line 20 to check the operating status of the sensors themselves.

Additionally, the electronic unit 10 comprises an electrical power supplying stage 15 configured to generate direct current electrical potentials (DC) to be supplied to the processing stage 1 and to the managing stage 2 of the sensors from a predetermined reference power supply potential Vcc referred to a ground potential GND.

In particular, the power supplying stage 15 is configured to generate, by means of appropriate regulator devices, a first V1 and a second V2 potential for supplying the processing unit 1 and the managing stage of the sensors 2, respectively.

For example, the reference power potential Vcc is generated from an acid-lead battery configured to provide a nominal voltage Vcc=24V.

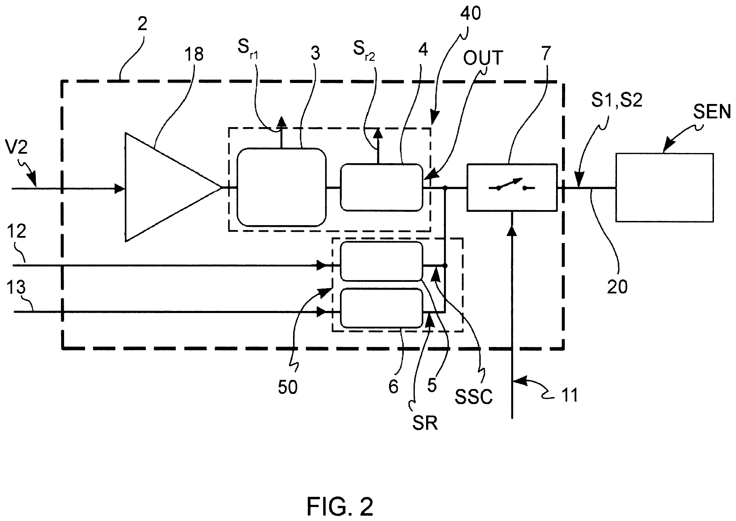

With reference to figure 2, the managing stage 2 of the sensors comprises a receiver circuitry block 40 operatively connected to the data communication line 20 to receive and measure, during said first interval of time t1, second digital signals S2 sent by the one or more sensors SEN in reply to the first digital querying signals S1 and to detect transmission faults through the data connection line 20. In figure 2, the one or more sensors SEN are represented by means of a single block as a whole.

In greater detail, the receiver circuitry block 40 comprises an electronic receiver circuit 3 which includes means for discriminating the second signals S2 sent by the sensors SEN in reply to the first generated digital querying signals S1. In particular, such a receiver circuit 3 is configured to perform an analogue and digital measurement of the reply of the sensors SEN connected to the data communication line 20. In other words, such a device is configured to distinguish a current digital pulse on an analogue current background which represents the consumption of the device. The results of the performed measurement are sent to the processing stage 1 by means of a respective first report signal S_{R1}.

Furthermore, the receiver circuitry block 40 comprises an electronic circuit 4 for detecting line anomalies which includes means for discriminating short-circuits and overcurrent conditions which occur on the data communication line 20. The results of such a detection are sent to the processing stage 1 by means of a respective second report signal S_{R2}.

Furthermore, the managing stage 2 of the sensors comprises a switching circuit 7 controlled by the processing stage 1 for connecting/disconnecting the receiver circuitry block 40 to/from the data communication line 20. In particular, such a switching circuit 7 is controlled by means of a control signal 11 to connect the receiver circuitry block 40 to the data communication line 20 during the aforesaid first interval of time t1 and to disconnect the receiver circuitry block 40 from the data communication line 20 during the second interval of time t2.

Again with reference to figure 2, the sensor managing stage 2 comprises a transmitter circuit 18 controlled by the processing stage 1 to generate the first digital querying signal S1 from the second power potential V2 generated by the power supplying stage 15.

Furthermore, advantageously, such a managing stage 2 comprises a circuitry block 50 for checking the operating status of the receiver circuitry block 40 directly connected to an output OUT, or output terminal, of the receiver circuitry block 40. Such operating status checking circuitry block 50 is activated by the processing stage 1 to check the operating status of the receiver circuitry block 40 during the aforesaid second interval of time t2 in which the managing stage 2 is disconnected from the data communication line 20.

In an exemplary embodiment of the invention, the second interval of time t2 is shorter than the first interval of time t1. It is worth noting that the first interval of time t1, i.e. the total querying time of all sensors SEN connected to the managing stage 2, varies according to the number of devices, from a minimum of 40 msec to a maximum of some minutes.

In particular, the second interval of time t2 has a maximum duration of 10 msec.

Thereby, the operating status of the receiver circuitry block 40 is checked during brief intervals of time during the normal operation of the electronic control unit 10, which is not influenced in this manner.

In an exemplary embodiment, the operation status checking circuitry block 50 comprises a first checking block 5 activated by the processing stage 1 to send a first checking signal SSC to the output terminal OUT of the receiver circuitry block 40. Such a first checking signal SSC is representative of the transmission faults through the data communication line 20.

Furthermore, the operating status checking circuitry block 50 comprises a second checking block 6 activated by the processing stage 1 to send a second checking signal SR to the output terminal OUT of the receiver circuitry block 40. Such a second checking signal SR is representative of the second digital signals S2 sent by the one or more sensors SEN in reply to the first digital querying signals S1.

In particular, the first checking block 5 is activated by the processing stage 1 by means of a first control signal 12. In particular, the second checking block 6 is activated by the processing stage 1 by means of a second control signal 13.

In a particular exemplary embodiment, the aforesaid first SSC and second SR checking signal are current pulse signals.

Even more in detail, the first checking signal SSC is a current pulse signal having a duration of 5 msec. Such a first checking signal SSC is configured to simulate a short-circuit or overcurrent on the data communication line 20.

Advantageously, the electronic circuit 4 can be cyclically checked by means of the first checking block 5 to detect line faults of the receiver circuitry block, to check its correct operation in discriminating short-circuits and overcurrent conditions in the line 20 or to record a malfunction thereof.

The second checking signal SR is a current pulse signal having a duration of 3 msec. Such a second checking signal SR is configured to simulate the second digital reply signals S2 sent by the one or more sensors SEN.

Advantageously, the receiver electronic circuit 3 can be cyclically tested by means of the second checking block 6, checking its correct operation in discriminating the second signals S2 sent by the sensors SEN in reply to the first digital querying signals S1 or registering a malfunction thereof.

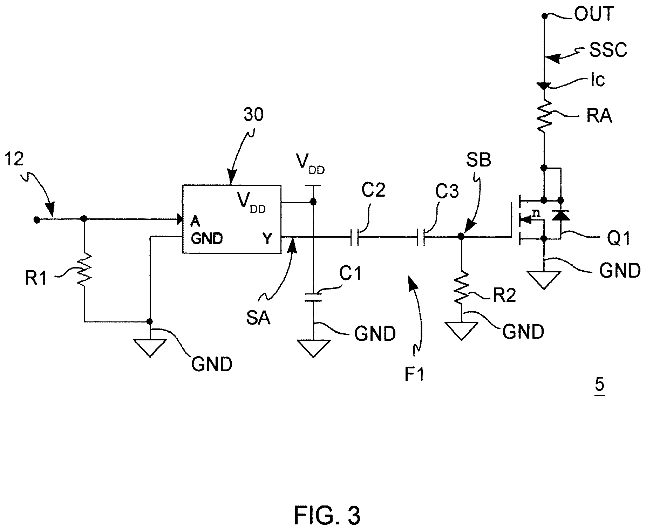

A circuitry embodiment of the first checking circuit 5 is described with reference to figure 3.

Such a first checking block 5 comprises a first transistor Q1, in particular an N-channel transistor MOS, having a first terminal (drain) connected to the output terminal OUT of the receiver block 40 by means of a first output resistor RA, and a second terminal (source) connected to the reference ground potential GND.

The first checking circuit 5 further comprises a first integrated circuit 30, in particular a buffer/line driver device, having an input pin A for receiving the aforesaid first control signal 12 generated by the processing stage 1. Such a first input pin A is connected to the ground reference potential GND by means of a first resistor R1.

On the basis of such a first control signal 12, the first integrated circuit 30 is configured to generate an enabling signal SA on a respective output pin Y.

A power supply pin VDD of the first integrated circuit 30 is connected to a respective power supply potential (e.g. 5V), referred to the ground potential GND, by means of a respective capacitor C1.

A control terminal (gate) of the first transistor Q1 is controlled by a first enabling signal SB generated by a filtering, in particular of the high-pass type, of the aforesaid enabling signal SA by means of a filtering circuit or filter F1.

In particular, such a filter F1 consists of a first C2 and a second C3 capacitor reciprocally connected in series between the output pin Y of the first integrated circuit 30 and the control terminal of the first transistor Q1. Furthermore, the filter F1 consists of a second resistor R2 connected between the control terminal of the first transistor Q1 and the reference ground potential GND.

Preferably, the first C2 and the second C3 capacitors are ceramic capacitors connected in series to each other so as to guarantee the correct operation of the circuit 5 also if a fault permanently short-circuits one of the two capacitors. Typical values of such capacitors are: C2=C3= 2.2 µF.

It is worth noting that the first enabling signal SB is configured to activate the first transistor Q1 in pulse manner to prevent continuous biasing of it. Thereby, the first transistor Q1 activated is configured to generate a pulse current I_{C} on the first output resistor RA, i.e. the first aforesaid checking signal SSC. By appropriately choosing the circuitry components of the first checking block 5, in particular the first output resistor RA, which is equal to 2.2 Ohm, the amplitude of the first output signal SSC is greater than the amplitude of the short-circuit current which would determine the activation of the protection.

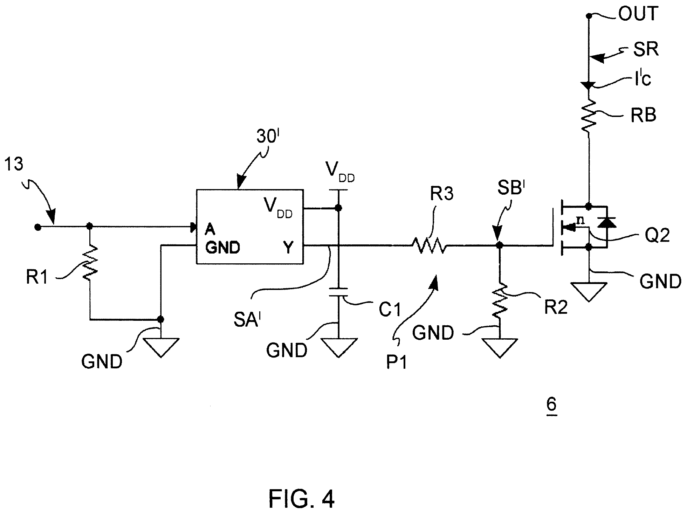

A circuitry embodiment of the second checking circuit 6 is described with reference to figure 4.

Such a second checking block 6 comprises a second transistor Q2, in particular an N-channel transistor MOS, having a first terminal (drain) connected to the output terminal OUT of the receiver block 40 by means of a second output resistor RB, and a second terminal (source) connected to the reference ground position GND.

Such a second checking circuit 6 further comprises a second integrated circuit 30', in particular a buffer/line driver device, similar to the first integrated circuit 30 of the first checking block 5. A respective input pin A of the second integrated circuit 30' is connected to the reference ground potential GND by means of the first resistor R1 and is configured to receive the aforesaid second control signal 13 generated by the processing stage 1.

On the basis of such a second control signal 13, the second integrated circuit 30 is configured to generate an enabling signal SA' on a respective output pin Y of the integrated circuit 30'.

A power supply pin VDD of the second integrated circuit 30 is connected to a respective power supply potential (e.g. 5V), referred to the ground potential GND, by means of a capacitor C1.

A gate of the second transistor Q2 is controlled by a respective first enabling signal SB' generated by running a voltage partition of the aforesaid enabling signal SA' by means of a resistive divider P1.

In particular, such a divider P1 consists of a second R2 and a third resistor R3. The third resistor R3 of the divider is connected between the output pin Y of the second integrated circuit 30' and the control terminal (gate) of the second transistor Q2. Furthermore, the second resistor R2 of the divider is connected between the control terminal of the first transistor Q2 and the reference ground potential GND.

Typical values of such resistors are: R2= 27 kOhm, R3= 0 Ohm.

It is worth noting that the first enabling signal SB' is configured to activate the second transistor Q2, which after activation is such as to generate a known respective pulse current I_{C'}. By appropriately choosing the circuitry components of the second checking block 6, in particular the second output resistor RB which is equal to 1.2 kOhm, the pulse current I_{C'} on the second output resistor RB corresponds to the aforesaid second checking signal SR and is adapted to simulate a reply similar to that generated by the second digital reply signals S2 of the sensors SEN.

The electronic unit 10 for controlling one or more fire sensors SEN of a fire detection system 100 achieves the aforesaid objects.

In particular, such an electronic unit 10 which includes the first 5 and the second 6 checking block can periodically test the correct operation of the electronic circuits in charge of receiving and interpreting the second reply signals S2 sent by the first detection sensors SEN and the circuits configured to detect malfunctions, e.g. short circuits or overcurrents, which occur on the communication line 20.

Such an operating fault detection in reasonable times, with the consequent maintenance actions which may be undertaken, allows to minimize the probabilities of incorrect reception and interpretation of such reply signals S2. This minimizes the generation of false alarms in the fire detection system or the missed detection of the occurrence of a real alarm condition. In other words, the electronic control unit 10 of the invention makes the fire detection system 100 more reliable.

Furthermore, such tests or auto-tests are performed on the field during the normal operation of the electronic control unit 10 and therefore do not require a direct intervention by an external operator.

Therefore, the electronic control unit 10 of the invention, in addition to facilitating the diagnostic operations on the circuits performed by an external maintenance operator, allows to reduce direct maintenance operation frequency on the fire detection system 100 over time.

Those skilled in art may make changes and adaptations to the embodiments of the electronic unit for controlling one or more fire sensors in a fire detection system according to the invention or can replace elements with others which are functionally equivalent in order to meet contingent needs without departing from the scope of the appended claims. All the features described above as belonging to one possible embodiment may be implemented irrespective of the other embodiments described.

## Claims

1. Electronic unit (10) for controlling one or more fire sensors (SEN) of a fire detection system (100), comprising:
- a processing stage (1);
- a managing stage (2) which can be connected, during a first interval of time (tl), to a data communication line (20) configured to connect said one or more sensors (SEN) to one another, said managing stage (2) being activated by the processing stage (1) to generate, during said first interval of time (t1), first digital querying signals (S1) to be sent to said one or more sensors (SEN) through the data communication line (20) to check the operating status of the sensors (SEN),
said managing stage (2) comprising a switching circuit (7) controlled by the processing stage (1) during said first interval of time (t1) in which the receiver circuitry block (40) is connected to the data communication line (20) by the switching circuit (7), to receive and measure, during said first interval of time (t1), second digital signals (S2) sent by said one or more sensors (SEN) in reply to said first digital querying signals (S1) and to detect transmission faults through the data communication line (20),
**characterized in that**
said managing stage (2) further comprises an operating status checking circuitry block (50) of the receiver circuitry block (40) directly connected to an output (OUT) of the receiver circuitry block (40), said operating status checking circuitry block (50) being activated by the processing stage (1) to check the operating status of the receiver circuitry block (40) during a second interval of time (t2) in which the receiver circuitry block (40) is disconnected from the data communication line (20) by the switching circuit (7).

2. Electronic control unit (10) according to claim 1, wherein said operating status checking circuitry block (50) comprises:
- a first checking block (5) activated by the processing stage (1) to send a first checking signal (SSC) representative of transmission faults through the data communication line (20), to the output (OUT) of the receiver circuitry block (40);
- a second checking block (6) activated by the processing stage (1) to send a second checking signal (SR) representative of the second digital signals (S2) sent by said one or more sensors (SEN) in reply to the first digital querying signals (Sl), to the output (OUT) of the receiver circuitry block (40).

3. Electronic control unit (10) according to claim 2, wherein said first (SSC) and second (SR) checking signals are current pulse signals.

4. Electronic control unit (10) according to claim 3, wherein said first checking signal (SSC) is a current pulse signal having a duration of 5 msec, said first checking signal being configured to simulate a short-circuit or overcurrent on the data communication line (20).

5. Electronic control unit (10) according to claim 3, wherein said second checking signal (SR) is a current pulse signal having a duration of 3 msec, said second checking signal being configured to simulate the second digital reply signals (S2) sent by said one or more sensors (SEN).

6. Electronic control unit (10) according to claim 1, wherein said second interval of time (t2) is shorter than said first interval of time (t1).

7. Electronic control unit (10) according to the preceding claim, wherein said second interval of time (t2) has a maximum duration of 10 ms.

8. Electronic control unit (10) according to claim 2, wherein said first checking block (5) comprises:
- a first transistor (Q1) having a first terminal connected to the output (OUT) of the receiver circuit block (40) by means of a first output resistor (RA), and a second terminal connected to a reference ground potential (GND);
- a first integrated circuit (30) having an input pin (A) for receiving a first control signal (12) generated by the processing stage (1) and generating an enabling signal (SA) on an output pin (Y);
- a filtering circuit (F1) configured to generate a first enabling signal (SB) from said enabling signal (SA), said first enabling signal (SB) being configured to control a control terminal of the first transistor (Q1) to activate it.

9. Electronic control unit (10) according to claim 8, wherein said filtering circuit (F1) of the first checking block (5) is a high-pass filter.

10. Electronic control unit (10) according to claim 9, wherein said high-pass filter consists of:
- a first (C2) and a second (C3) capacitor reciprocally connected in series between the output pin (Y) of the first integrated circuit (30) and the control terminal of the first transistor (Q1);
- a resistor (R2) connected between the control terminal of the first transistor (Q1) and the reference ground potential (GND).

11. Electronic control unit (10) according to claim 2, wherein said second checking block (6) comprises:
- a second transistor (Q2) having a first terminal connected to the output (OUT) of the receiver circuit block (40) by means of a second output resistor (RB), and a second terminal connected to a reference ground potential (GND);
- a second integrated circuit (30) having an input pin (A) for receiving a second control signal (13) generated by the processing stage (1) and generating an enabling signal (SA) on an output pin (Y);
- a voltage divider circuit (P1) configured to generate a first enabling signal (SB') from said enabling signal (SA'), said first enabling signal (SB') being configured to control a control terminal of the second transistor (Q2) to activate it.

12. Electronic control unit (10) according to claim 11, wherein said voltage divider circuit (P1) consists of a first (R2) and a second (R3) resistor, said second resistor (R3) being connected between the output pin (Y) of the second integrated circuit (30') and the control terminal of the second transistor (Q2), said first resistor (R2) being connected between the control terminal of the second transistor (Q2) and the reference ground potential (GND).

13. An electronic system (100) for detecting fires in an environment, comprising:
- a plurality of fire sensors (SEN) distributed in said environment;
- an electronic control unit (10) according to at least one of the claims 1-12, which are electrically connected to said plurality of sensors (SEN) .

## Patentansprüche

1. Elektronische Einheit (10) zum Steuern eines oder mehrerer Feuersensoren (SEN) eines Feuer-Detektion-Systems (100), umfassend:
- eine Verarbeitung-Stufe (1);
- eine Verwaltung-Stufe (2), welche während eines ersten Zeitintervalls (t1) mit einer Daten-Kommunikation-Leitung (20) verbunden werden kann, welche dazu eingerichtet ist, den einen oder die mehreren Sensoren (SEN) miteinander zu verbinden, wobei die Verwaltung-Stufe (2) durch die Verarbeitung-Stufe (1) aktiviert wird, um während des ersten Zeitintervalls (t1) erste digitale Abfrage-Signale (S1) zu erzeugen, welche an den einen oder die mehreren Sensoren (SEN) durch die Daten-Kommunikation-Leitung (20) zu senden sind, um den Betriebsstatus der Sensoren (SEN) zu überprüfen,
wobei die Verwaltung-Stufe (2) eine Schalt-Schaltung (7) umfasst, welche durch die Verarbeitung-Stufe (1) während des ersten Zeitintervalls (t1) gesteuert wird, in welchem der Empfangseinheit-Schaltung-Block (40) mit der Daten-Kommunikation-Leitung (20) durch die Schalt-Schaltung (7) verbunden ist, um während des ersten Zeitintervalls (t1) zweite digitale Signale (S2) zu empfangen und zu messen, welche durch den einen oder die mehreren Sensoren (SEN) in Reaktion auf die ersten digitalen Abfrage-Signale (S1) gesendet worden sind, und Übertragung-Fehler durch die Daten-Kommunikation-Leitung (20) zu detektieren,
**dadurch gekennzeichnet, dass**
die Verwaltung-Stufe (2) ferner einen Betriebsstatus-Überprüfung-Schaltung-Block (50) des Empfangseinheit-Schaltung-Blocks (40) umfasst, welcher direkt mit einer Ausgabe (OUT) des Empfangseinheit-Schaltung-Blocks (40) verbunden ist, wobei der Betriebsstatus-Überprüfung-Schaltung-Block (50) durch die Verarbeitung-Stufe (1) aktiviert wird, um den Betriebsstatus des Empfangseinheit-Schaltung-Blocks (40) während eines zweiten Zeitintervalls (t2) zu überprüfen, in welchem der Empfangseinheit-Schaltung-Block (40) von der Daten-Kommunikation-Leitung (20) durch die Schalt-Schaltung (7) getrennt ist.

2. Elektronische Steuereinheit (10) nach Anspruch 1, wobei der Betriebsstatus-Überprüfung-Schaltung-Block (50) umfasst:
- einen ersten Überprüfung-Block (5), welcher durch die Verarbeitung-Stufe (1) aktiviert wird, um ein erstes Überprüfung-Signal (SSC), welches Übertragung-Fehler durch die Daten-Kommunikation-Leitung (20) darstellt, an die Ausgabe (OUT) des Empfangseinheit-Schaltung-Blocks (40) zu senden;
- einen zweiten Überprüfung-Block (6), welcher durch die Verarbeitung-Stufe (1) aktiviert wird, um ein zweites Überprüfung-Signal (SR), welches die zweiten digitalen Signale (S2) darstellt, welche durch den einen oder die mehreren Sensoren (SEN) in Reaktion auf die ersten digitalen Abfrage-Signale (S1) gesendet worden sind, an die Ausgabe (OUT) des Empfangseinheit-Schaltung-Blocks (40) zu senden.

3. Elektronische Steuereinheit (10) nach Anspruch 2, wobei die ersten (SSC) und die zweiten (SR) Überprüfung-Signale Strom-Puls-Signale sind.

4. Elektronische Steuereinheit (10) nach Anspruch 3, wobei das erste Überprüfung-Signal (SSC) ein Strom-Puls-Signal ist, welches eine Dauer von 5 ms aufweist, wobei das erste Überprüfung-Signal dazu eingerichtet ist, einen Kurzschluss oder einen Überstrom an der Daten-Kommunikation-Leitung (20) zu simulieren.

5. Elektronische Steuereinheit (10) nach Anspruch 3, wobei das zweite Überprüfung-Signal (SR) ein Strom-Puls-Signal ist, welches eine Dauer von 3 ms aufweist, wobei das zweite Überprüfung-Signal dazu eingerichtet ist, die zweiten digitalen Reaktion-Signale (S2) zu simulieren, welche durch den einen oder die mehreren Sensoren (SEN) gesendet worden sind.

6. Elektronische Steuereinheit (10) nach Anspruch 1, wobei das zweite Zeitintervall (t2) kürzer ist als das erste Zeitintervall (t1).

7. Elektronische Steuereinheit (10) nach dem vorhergehenden Anspruch, wobei das zweite Zeitintervall (t2) eine maximale Dauer von 10 ms aufweist.

8. Elektronische Steuereinheit (10) nach Anspruch 2, wobei der erste Überprüfung-Block (5) umfasst:
- einen ersten Transistor (Q1), welcher einen ersten Anschluss, welcher mit der Ausgabe (OUT) des Empfangseinheit-Schaltung-Blocks (40) mittels eines ersten Ausgabe-Widerstands (RA) verbunden ist, und einen zweiten Anschluss aufweist, welcher mit einem Referenz-Erdung-Potenzial (GND) verbunden ist;
- eine erste integrierte Schaltung (30), welche einen Eingabe-Stift (A) zum Empfangen eines ersten Steuer-Signals (12) aufweist, welches durch die Verarbeitung-Stufe (1) erzeugt wird und ein Ermöglichung-Signal (SA) an einem Ausgabe-Stift (Y) erzeugt;
- eine Filter-Schaltung (F1), welche dazu eingerichtet ist, ein erstes Ermöglichung-Signal (SB) von dem Ermöglichung-Signal (SA) zu erzeugen, wobei das erste Ermöglichung-Signal (SB) dazu eingerichtet ist, einen Steuer-Anschluss des ersten Transistors (Q1) zu steuern, um diesen zu aktivieren.

9. Elektronische Steuereinheit (10) nach Anspruch 8, wobei die Filter-Schaltung (F1) des ersten Überprüfung-Blocks (5) ein Hochpass-Filter ist.

10. Elektronische Steuereinheit (10) nach Anspruch 9, wobei der Hochpass-Filter besteht aus:
- einem ersten (C2) und einem zweiten (C3) Kondensator, welche reziprok in Reihe zwischen dem Ausgabe-Stift (Y) der ersten integrierten Schaltung (30) und dem Steuer-Anschluss des ersten Transistors (Q1) verbunden sind;
- einem Widerstand (R2), welcher zwischen dem Steuer-Anschluss des ersten Transistors (Q1) und dem Referenz-Erdung-Potenzial (GND) verbunden ist.

11. Elektronische Steuereinheit (10) nach Anspruch 2, wobei der zweite Überprüfung-Block (6) umfasst:
- einen zweiten Transistor (Q2), welcher einen ersten Anschluss, welcher mit der Ausgabe (OUT) des Empfangseinheit-Schaltung-Blocks (40) mittels eines zweiten Ausgabe-Widerstands (RB) gebunden ist, und einen zweiten Anschluss aufweist, welcher mit einem Referenz-Erdung-Potenzial (GND) verbunden ist;
- eine zweite integrierte Schaltung (30), welche einen Eingabe-Stift (A) zum Empfangen eines zweiten Steuer-Signals (13) aufweist, welches durch die Verarbeitung-Stufe (1) erzeugt wird, und welche ein Ermöglichung-Signal (SA) an einem Ausgabe-Stift (Y) erzeugt;
- eine Spannung-Teilung-Schaltung (P1), welche dazu eingerichtet ist, ein erstes Ermöglichung-Signal (SB') von dem Ermöglichung-Signal (SA') zu erzeugen, wobei das erste Ermöglichung-Signal (SB') dazu eingerichtet ist, einen Steuer-Anschluss des zweiten Transistors (Q2) zu steuern, um diesen zu aktivieren.

12. Elektronische Steuereinheit (10) nach Anspruch 11, wobei die Spannung-Teilung-Schaltung (P1) aus einem ersten (R2) und einem zweiten (R3) Widerstand besteht, wobei der zweite Widerstand (R3) zwischen dem Ausgabe-Stift (Y) der zweiten integrierten Schaltung (30') und dem Steuer-Anschluss des zweiten Transistors (Q2) verbunden ist, wobei der erste Widerstand (R2) zwischen dem Steuer-Anschluss des zweiten Transistors (Q2) und dem Referenz-Erdung-Potenzial (GND) verbunden ist.

13. Elektronisches System (100) zum Detektieren von Feuer in einer Umgebung, umfassend:
- eine Mehrzahl von Feuer-Sensoren (SEN), welche in der Umgebung verteilt sind;
- eine elektronische Steuereinheit (10) nach wenigstens einem der Ansprüche 1 bis 12, welche elektrisch mit der Mehrzahl von Sensoren (SEN) verbunden ist.

## Revendications

1. Unité électronique de commande (10) pour commander un ou davantage de capteurs d'incendie (SEN) d'un système de détection d'incendie (100), comprenant :
- un étage de traitement (1),
- un étage de gestion (2) qui peut être connecté, pendant un premier intervalle de temps (tl), à une ligne de communication de données (20) configurée pour connecter lesdits un ou davantage de capteurs (SEN) les uns aux autres, l'étage de gestion (2) étant activée par l'étage de traitement (1) pour engendrer, pendant le premier intervalle de temps (tl), des premiers signaux d'interrogation digitaux (S1) destinés à être envoyés auxdits un ou davantage de capteurs (SEN) via la ligne de communication (20) pour vérifier l'état de fonctionnement des capteurs (SEN),
l'étage de gestion (2) comprenant un circuit de commutation (7) commandé par l'étage de traitement (1) pendant le premier intervalle de temps (t1) pendant lequel le bloc de circuits de réception (40) est connecté à la ligne de communication de données (20) par le circuit de commutation (7) pour recevoir et mesurer, pendant le premier intervalle de temps (tl), des deuxièmes signaux digitaux (S2) envoyés par lesdits un ou davantage de capteurs (SEN) en réponse aux premiers signaux d'interrogation digitaux (S1) et pour détecter des erreurs de transmission via la ligne de communication de données (20),
**caractérisée en ce que**
l'étage de gestion (2) comprend en outre un bloc de circuits (50) de vérification de l'état de fonctionnement du bloc de circuits de réception (40) directement connecté à une sortie (OUT) du bloc de circuits de réception (40), le bloc de circuits de vérification de l'état de fonctionnement (50) étant activé par l'étage de traitement (1) pour vérifier l'état de fonctionnement du bloc de circuits de réception (40) pendant un deuxième intervalle de temps (t2) pendant lequel le bloc de circuits de réception (40) est déconnecté de la ligne de communication de données (20) par le circuit de commutation (7).

2. Unité électronique de commande (10) selon la revendication 1, **caractérisée en ce que** le bloc de circuits de vérification de l'état de fonctionnement (50) comprend :
- un premier bloc de vérification (5) activé par l'étage de traitement (1) pour envoyer un premier signal de vérification (SSC) représentatif d'erreurs de transmission via la ligne de communication de données (20), à la sortie (OUT) du bloc de circuits de réception (40),
- un deuxième bloc de vérification (6) activé par l'étage de traitement (1) pour envoyer en deuxième signal de vérification (SR) représentatif des deuxièmes signaux digitaux (S2) envoyés par lesdits un ou davantage de capteurs (SEN) en réponse aux premiers signaux d'interrogation digitaux (S1), à la sortie (OUT) du bloc de circuits de réception (40).

3. Unité électronique de commande (10) selon la revendication 2, **caractérisée en ce que** les premier (SSC) et deuxième (SR) signaux de vérification sont des signaux d'impulsion de courant.

4. Unité électronique de commande (10) selon la revendication 3, **caractérisée en ce que** le premier signal de vérification (SSC) est un signal d'impulsion de courant ayant une durée de 5 ms, le premier signal de vérification étant configuré pour simuler un court-circuit ou une surintensité sur la ligne de communication de données (20).

5. Unité électronique de commande (10) selon la revendication 3, **caractérisée en ce que** le deuxième signal de vérification (SR) est un signal d'impulsion de courant ayant une durée de 3 ms, le deuxième signal de vérification étant configuré pour simuler les deuxièmes signaux de réponse digitaux (S2) envoyés par lesdits un ou davantage de capteurs (SEN).

6. Unité électronique de commande (10) selon la revendication 1, **caractérisée en ce que** le deuxième intervalle de temps (t2) est plus court que le premier intervalle de temps (t1).

7. Unité électronique de commande (10) selon la revendication précédente, **caractérisée en ce que** le deuxième intervalle de temps (t2) a une durée maximale de 10 ms.

8. Unité électronique de commande (10) selon la revendication 2, **caractérisée en ce que** le premier bloc de vérification (5) comprend :
- un premier transistor (Q1) ayant une première borne connectée à la sortie (OUT) du bloc de circuits de réception (40) par une première résistance de sortie (RA), et une deuxième borne connectée à un potentiel de référence de masse (GND),
- un premier circuit intégré (30) ayant une borne d'entrée (A) pour recevoir un premier signal de commande (12) engendré par l'étage de traitement (1) et engendrant un signal de validation (SA) à une borne de sortie (Y),
- un circuit de filtrage (F1) configuré pour engendrer un premier signal de validation (SB) à partir du signal de validation (SA), le premier signal de validation (SB) étant configuré pour commander une borne de commande du premier transistor (Q1) pour l'activer.

9. Unité électronique de commande (10) selon la revendication 8, **caractérisée en ce que** le circuit de filtrage (F1) du premier bloc de vérification (5) est un filtre passe-haut.

10. Unité électronique de commande (10) selon la revendication 9, **caractérisée en ce que** le filtre passe-haut est constitué de :
- un premier (C2) et un deuxième (C3) condensateurs connectés entre eux en série entre la borne de sortie (Y) du premier circuit intégré (30) et la borne de commande du premier transistor Q1),
- une résistance (R2) connectée entre la borne de commande du premier transistor (Q1) et le potentiel de référence de masse (GND).

11. Unité électronique de commande (10) selon la revendication 2, **caractérisée en ce que** le deuxième bloc de vérification (6) comprend :
- un deuxième transistor (Q2) ayant une première borne connectée à la sortie (OUT) du bloc de circuits de réception (40) par une deuxième résistance de sortie (RB), et une deuxième borne connectée au potentiel de référence de masse (GND),
- un deuxième circuit intégré (30) ayant une borne d'entrée (A) pour recevoir un deuxième signal de commande (13) engendré par l'étage de traitement (1) et engendrant un signal de validation (SA) à une borne de sortie (Y),
- un circuit diviseur de tension (P1) configuré pour engendrer un premier signal de validation (SB') à partir du signal de validation (SA'), le premier signal de validation (SB') étant configuré pour commander une borne de commande du deuxième transistor (Q2) pour l'activer.

12. Unité électronique de commande (10) selon la revendication 11, **caractérisée en ce que** le circuit diviseur de tension (P1) est constitué d'une première (R2) et d'une deuxième (R3) résistance, la deuxième résistance (R3) étant connectée entre la borne de sortie (Y) du deuxième circuit intégré (30') et la borne de commande du deuxième transistor (Q2), la deuxième résistance (R2) étant connectée entre la borne de commande du deuxième transistor (Q2) et le potentiel de référence de masse (GND).

13. Système électronique (100) pour détecter des incendies dans un environnement, comprenant
- une pluralité de capteurs d'incendie (SEN) repartis sur l'environnement,
- une unité électronique de commande (10) selon au moins une des revendications 1 à 12, qui est électriquement connectée à ladite pluralité de capteurs (SEN).
